# NEUE EUROPÄISCHE PATENTSCHRIFT

(11) **EP 0 694 707 B3**
(45) Veröffentlichungstag dieser Patentschrift: **04.04.2012**
(45) Hinweis auf die Patenterteilung: 04.10.2000
(21) Anmeldenummer: 95111717.5
(22) Anmeldetag: 25.07.1995
(51) Int. Cl.: F16D 65/097

(54) **Vorrichtung zum Halten eines Bremsbelages in einer Scheibenbremse**
Device for retaining a friction lining in a disc brake
Dispositif de maintien d'une garniture de friction dans un frein à disque

(30) Priorität: 27.07.1994 DE 4426603
(43) Veröffentlichungstag der Anmeldung: 31.01.1996
(73) Patentinhaber: Wabco Radbremsen GmbH, 68229 Mannheim (DE)
(72) Erfinder: Antony, Paul, D-67550 Worms (DE); Jäger, Hellmut, D-68535 Edingen-Neckarhausen (DE)
(74) Vertreter: Leinweber & Zimmermann

(56) Entgegenhaltungen:
- WO-A-92/00465
- DE-A- 1 967 110
- DE-A- 2 114 812
- GB-A- 2 243 887

## Beschreibung

Die Erfindung betrifft eine Vorrichtung nach dem Oberbegriff von Anspruch 1.

Eine solche Vorrichtung ist aus der EP-0 248 385 B1 bekannt. Bei der bekannten Vorrichtung ist die Niederhattefeder in Drehrichtung der Bremsscheibe nicht mit dem Niederhaltebügel gekoppelt, weshalb sie sich gegenüber dem Bügel in der genannten Richtung verschieben kann. Auf der anderen Seite ist die Niederhaltefeder mit dem Belagträger bzw. der Druckplatte in Drehrichtung der Bremsscheibe gekoppelt. Beim Bremsen wird sich daher die Niederhaltefeder gegenüber dem Niederhaltebügel in Drehrichtung der Bremsscheibe verschieben. Diese Verschiebung wird nach Beendigung des Bremsvorgangs nicht korrigiert, d.h. die Stellung des Belagträgers bzw. der Druckplatte in dem Belagschacht ist bezogen auf die Bremsscheibe und die Seitenbegrenzung des Belagschachtes nicht optimal. Die Folge sind nachteilige Klapper- bzw. Anschlaggeräusche bzw. eine Schrägstellung des Belagträgers bzw. der Druckplatte.

Die obigen Ausführungen gelten ebenso für die Vorrichtung nach der WO 92/00465. Auch hier ist die Niederhaftefeder in Drehrichtung der Bremsscheibe von dem Niederhaltebügel entkoppelt und mit dem Belagträger gekoppelt.

Der Erfindung liegt demzufolge die Aufgabe zugrunde, eine Vorrichtung der eingangs genannten Art anzugeben, bei der die vorstehenden Probleme gelöst sind, wobei insbesondere die bevorzugte Stellung des Belagträgers bzw der Druckplatte in dem Belagschacht vor, während und/oder nach dem Bremsvorgang optimiert ist.

Erfindungsgemäß wird die gestellte Aufgabe mit einer Vorrichtung zum Halten eines Bremsbelages in einer Scheibenbremse nach Anspruch 1 gelöst. Vorleilhafte Ausgestaltungen sind Gegenstand der Ansprüche 2 bis 10.

Aus der DE-A-19 67 110 ist eine Vorrichtung zum Halten eines Bremsbelages in einer Scheibenbremse bekannt. Eine dabei vorgesehene Niederhaltefeder dient zweierlei Zwecken, nämlich zum einen der bezüglich der Bremsscheibe radialen Vorspannung von Stützplatten und zum anderen der bezüglich der Bremsscheibe tangentialen Vorspannung der genannten Stützplatten. Um die tangentiale Vorspannung zu erreichen, ist die in Kreuzform ausgebildete Niederhaltefeder nicht symmetrisch. Vielmehr erstreckt sich der Querbalken des Kreuzes außermittig bezüglich der Enden des Längsbalkens.

Aus der GB-A-2,243,887 ist eine Vorrichtung zum Halten eines Bremsbelages in einer Scheibenbremse bekannt, die symmetrisch aufgebaut ist, so daß keine Tangentialvorspannung vorliegt.

Mit anderen Worten wird die Niederhaltefeder erfindungsgemäß mit dem überlicherweise am Bremsgehäuse oder am Bremssattel befestigten Niederhalteelement gekoppelt, um ihrerseits an einem Mitdrehen mit der Bremsscheibe gehindert zu sein. Durch die (nach Überschreitung eines Schwellenwertes) elastische Kopplung der "ortsfesten" Niederhaltefeder mit dem Kraftübertragungselement wird das Kraftübertragungselement nach Abschluß des Bremsvorgangs und entsprechender Auslenkung infolge Mitdrehens mit der Bremsscheibe wieder in die Ausgangsposition zurückgeführt. Dadurch werden Klapper- und Anschlaggeräusche entgegen den Seitenbegrenzungen des Betagschachtes vermieden und einer nachteiligen Schrägstellung gegenüber der Bremsscheibe entgegengewirkt, in dessen Folge sich ansonsten ein nachteiliger Schrägverschleiß des Bremsbelages einstellen würde.

Selbstverständlich kann der Schwellenwert entsprechend den gegebenen Verhältnissen angemessen gewählt sein. Er kann aber auch Null betragen.

Erfindungsgemäß beinhaltet die Kopplung der Niederhaltefeder mit dem Niederhalteelement mindestens einen in Umfangsrichtung der Bremsscheibe ausgerichteten Anschlag.

Dabei ist der Anschlag von einer Seitenbegrenzung eines in Radialrichtung der Bremsscheibe versetzten Abschnitts der Niederhaltefeder gebildet. Diese Lösung ist konstruktiv besonders einfach und bietet darüber hinaus den Vorteil einer gewissen Elastizität.

Zur sicheren Halterung des Kraftübertragungselements kann weiter erfindungsgemäß vorgesehen sein, daß die Breite desjenigen Bereichs der Niederhaltefeder, in dem der Anschlag ausgebildet ist, größer als die Dicke des Kraftübertragungselements ist.

Zur Erhöhung der Vorspannkraft, mit der die Niederhaltefeder auf das Kraftübertragungselement einwirkt, ist es erfindungsgemäß bevorzugt, daß sich zumindest ein freies Ende der Niederhaltefeder nach radial innen bezüglich der Bremsscheibe erstreckt.

Erfindungsgemäß ist die Niederhaltefeder in Axialrichtung der Bremsscheibe mit dem Kraftübertragungselement gekoppelt und von dem Niederhalteelement entkoppelt.

Dazu kann die Kopplung der Niederhaltefeder mit dem Kraftübertragungselement in Axialrichtung der Bremsscheibe mindestens einen Ansatz an dem Kraftübertragungselement oder der Niederhaltefeder beinhalten, der in eine quer zur Axialrichtung der Bremsscheibe längliche Ausnehmung in der Niederhaltefeder oder dem Kraftübertragungselement eingreift.

Bei der Montage und Demontage der Niederhaltefeder kann es wünschenswert sein, daß die Niederhaltefeder auch ohne den Niederhalteelement an dem Kraftübertragungselement gehalten ist. Dazu ist es erfindungsgemäß bevorzugt, daß der Ansatz in der zur Bremsscheibe parallelen Ebene eine zu seinem Kopf hin zunehmende Breite hat. Bei dieser Ausgestaltung kann die Unterseite des Kopfes zur leicht vorgespannten Halterung der Niederhaltefeder an dem Kraftübertragungselement dienen.

Dabei kann der Ansatz eine zu seinem Kopf hin zunehmende Breite gegenüber seinem Fußbereich haben. Vorzugsweise ist er an dem Kraftübertragungselement ausbildet.

Zur Sicherung der Niederhaltefeder an dem Kraftübertragungselement kann die längliche Ausnehmung an der Niederhaltefeder dabei kürzer als die Breite des Kopfes und länger als die Breite des Fußes des Ansatzes des Kraftübertragunselementes sein.

Um die Montage der Niederhaltefeder zu erleichtern, dennoch aber eine sichere Halterung der Niederhaltefeder nach der Montage zu gewährleisten, kann es erfindungsgemäß vorgesehen sein, daß die Längsachse der Ausnehmung an der Niederhaltefeder mit der Längsachse der Niederhaltefeder selbst einen von Null verschiedenen Winkel einschließt.

Es kann aber auch vorgesehen sein, daß die Ausnehmung an der Niederhaltefeder in einem ersten Bereich länger als die Breite des Kopfes und in einem zweiten Bereich kürzer als die Breite des Kopfes, aber länger als die Breite des Fußes des Ansatzes des Kraftübertragungselementes ist.

Nachstehend ist die Erfindung anhand bevorzugter Ausführungsbeispiele unter Bezugnahme auf die beiliegende Zeichnung mit weiteren Einzelheiten näher erläutert. Dabei zeigen
- Fig 1: eine Seitenansicht einer Niederhaltefeder nach einem Ausführungsbeispiel der erfindungsgemäßen Vorrichtung,
- Fig. 2: eine Draufsicht auf die Niederhaltefeder nach Fig. 1,
- Fig. 2a, 2b: Draufsichten wie in Fig. 2, jeoch mit anderen Ausführungen einer zentralen Ausnehmung,
- Fig. 3: eine Axialansicht eines Kraftübertragungselements in Form eines Belagträgers nach einem Ausführungsbeispiel der erfindungsgemäßen Vorrichtung,
- Fig. 3a: eine Draufsicht auf den Belagträger nach Fig. 3,
- Fig. 4: eine Axialansicht eines Belagträgers nach einem zweiten Ausführungsbeispiel der Erfindung,
- Fig. 5: eine Axialansicht eines Belagträgers für die Niederhaltefeder nach den Figuren 1 und 2,
- Fig. 5a: eine Draufsicht auf den Belagträger nach Fig. 5,
- Fig.6: eine Axialansicht des Belagträgers nach Fig. 5 mit der Niederhaltefeder nach den Figuren 1 und 2,
- Fig 6a: eine Draufsicht auf die Anordnung nach Fig. 6 mit der Niederhaltefeder nach Fig. 2,
- Fig. 6b: eine Draufsicht auf die Anordnung nach Fig. 6, jedoch mit der Niederhaltefeder nach Fig. 2a,
- Fig. 7: die gleiche Ansicht wie Fig. 6, jedoch mit versetzt angeordnetem Niederhaltebügel.

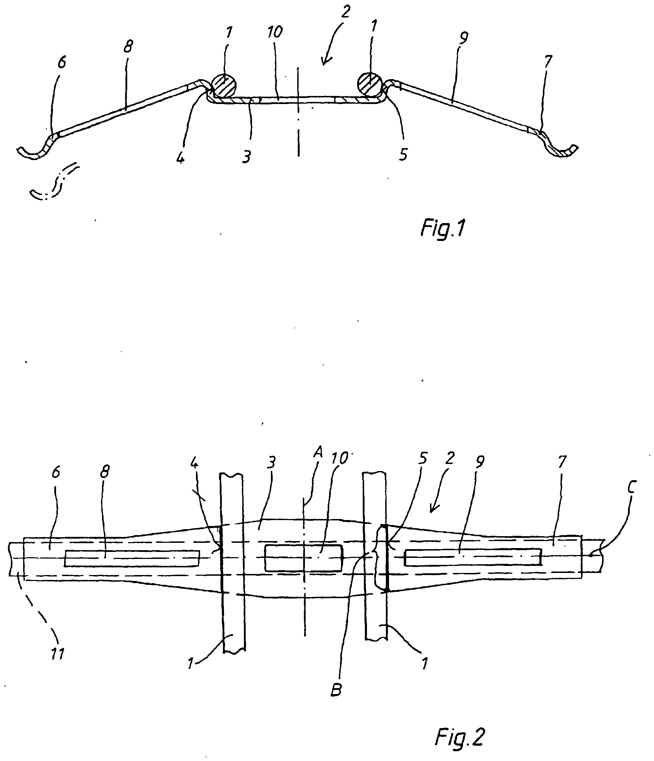

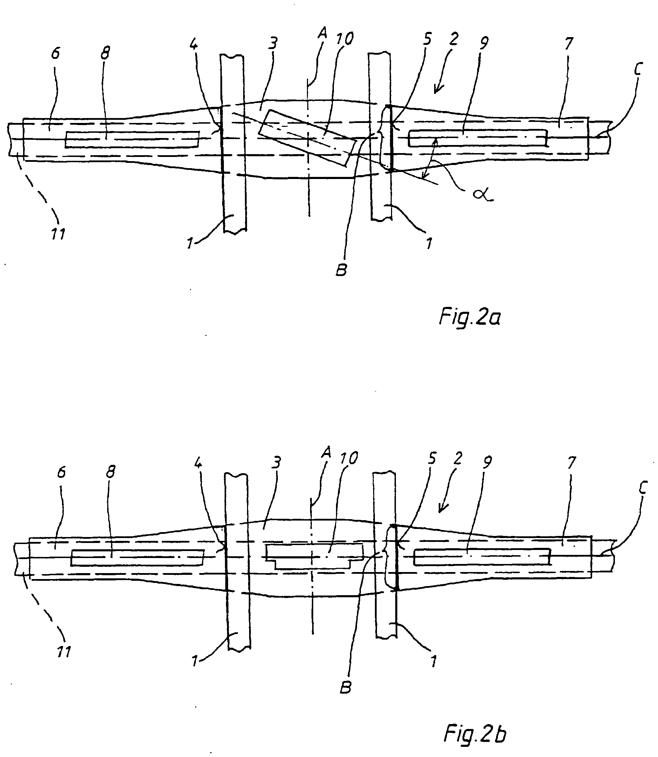

Die Figuren 1 und 2 zeigen einen Niederhaltebügel 1, der an einem nicht gezeigten Bremssattel ortsfest gehaltert ist und sich symmetrisch zu einer in Axialrichtung der ebenfalls nicht gezeigten Bremsscheibe verlaufenden Mittelachse A erstreckt. Der Niederhaltebügel 1 kann auch als Niederhaltestift, Niederhalteblech oder ähnliches ausgebildet sein. Eine Niederhaltefeder 2, die vorzugsweise als Blattfeder ausgebildet ist, umfaßt einen Mittelabschnitt 3, zwei radiale Stützbereiche 4, 5 sowie zwei Federschenkel 6, 7. Die Federschenkel 6, 7 erstrecken sich von den Stützbereichen 4, 5 in etwa tangential zur Bremsscheibe und sind an ihren freien Enden gebogen. Der Mittelabschnitt 3 ist gegenüber den Federschenkeln 6, 7 zur Bildung der Stützbereiche 4, 5 in Radialrichtung bezüglich der Bremsscheibe versetzt.

Die sich von dem Mittelabschnitt 3 in etwa radial bezüglich der Bremsscheibe erstreckenden Stützbereiche 4, 5 sind entsprechend der Breite des ortsfesten Niederhaltebügels 1 derart voneinander beabstandet, daß die Niederhaltefeder 2 in Umfangsrichtung der Bremsscheibe am Niederhaltebügel 1 abgestützt ist (gekoppelt). Demgegenüber ist sie in Axialrichtung bezüglich der Bremsscheibe gegenüber dem Niederhaltebügel 1 verschiebbar (entkoppelt).

Die Breite B der Stützbereiche 4,5 ist größer als die Dicke des Belagträgers 11 bzw. die Dicke der nicht gezeigten Druckplatte. Dadurch ist ein Drehen der Niederhaltefeder 2 um ihre Achse C ausgeschlossen, wenn sie beispielsweise gegenüber dem Niederhaltebügel 1 festgelegt ist. Ein solches Drehen kann bei der Vorrichtung nach der EP- 0 248 385 B1 auftreten, weil dort zwar die Niederhaltefeder mit Laschen den Belagträger umgreift, jedoch gegenüber dem Niederhalteteil nicht festgelegt ist. Somit kann sich auch der Belag im Belagschacht, und somit gegenüber der Bremsscheibe, drehen. Das Unterbinden des Drehens, und damit einer Schrägstellung, wirkt sich besonders vorteilhaft auf die Positionierung des Belagträgers 11 innerhalb der Belagschachtführung aus, wenn dieser, wie nachfolgend erläutert, mit der Niederhaltefeder 2 in Verbindung steht.

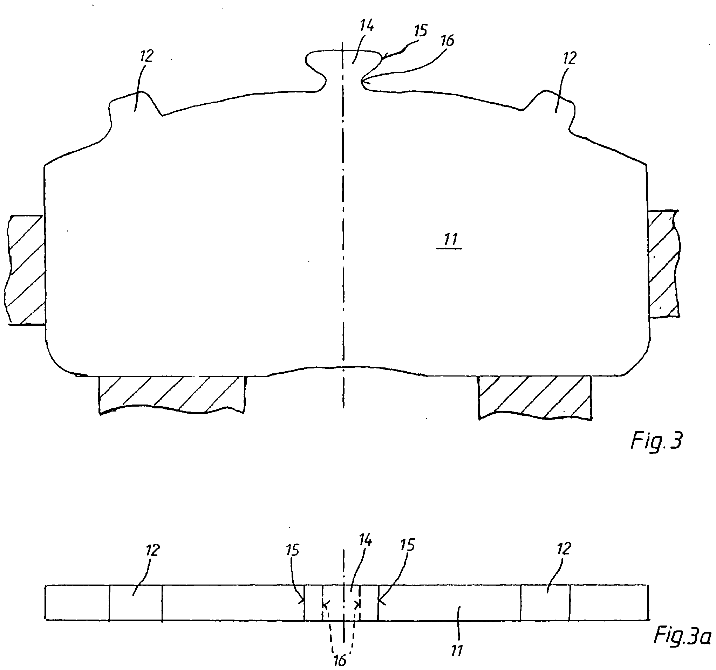

Jeder Federschenkel 6, 7 weist eine Aufnahmeöffnung 8, 9 auf. Ferner ist bei dem in den Figuren 1 und 2 gezeigten Ausführungsbeispiel eine weitere Aufnahmeöffnung 10 in den Mittelabschnitt 3 vorgesehen. Diese in Richtung der Federachse C länglichen Öffnungen dienen dazu, in den Figuren 3 bis 7 dargestellte radiale Ansätze 12, 14 des Belagträgers 11 bzw. der Druckplatte so zu umgreifen, daß eine bezüglich der Bremsscheibe axiale Kopplung, aber in Umfangsrichtung gesehene Entkopplung zwischen der Niederhaltefeder und dem Belagträger 11 bzw. der Druckplatte gewährleistet ist.

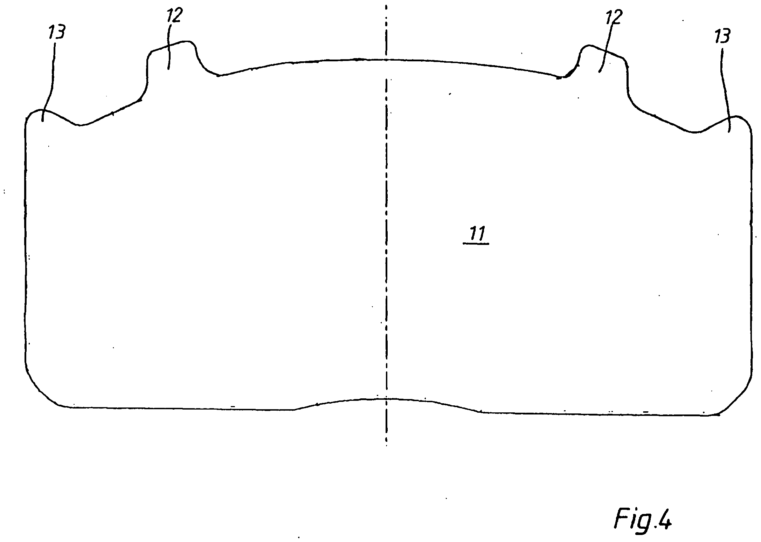

Die Figuren 3 bis 5a zeigen Belagträger 11, von denen sich jeweils radiale Ansätze 12, 14 fort erstrecken. Sie dienen dazu, in entsprechende Aufnahmeöffnungen 8 bis 10 der Niederhaltefeder 2 einzugreifen. Der Belagträger 11 nach Fig. 3 weist drei Ansätze 12, 14 auf, von denen die Ansätze 12 symmetrisch zu dem mittig angeordneten Ansatz 14 liegen. Nach Fig. 4 sind beidseits der Mittelachse des Belagträgers 11 je zwei Ansätze 12, 13 vorgesehen, wobei die Ansätze 12 zum Eingriff in entsprechende Ausnehmungen 8, 9 der Niederhaltefeder 2 dienen, wohingegen die Ansätze 13 zur elastischen Kopplung der Niederhaftefeder 2 mit dem Belagträger 11 über die Federschenkel 6, 7 vorgesehen sind.

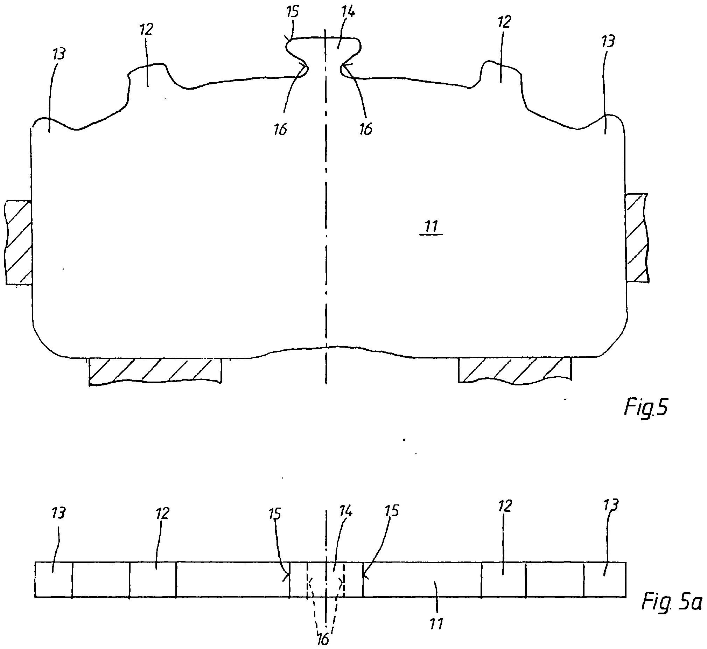

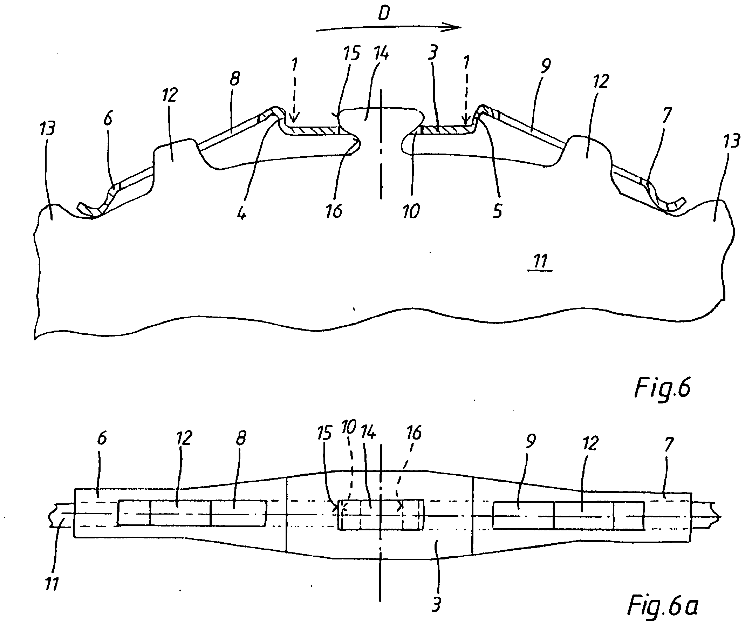

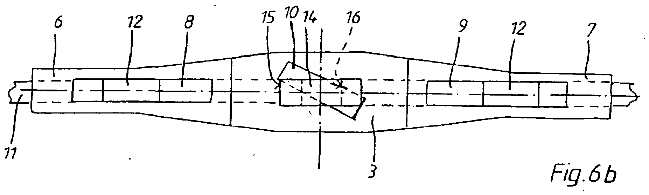

Bei dem Ausführungsbeispiel nach Fig. 5, das erfindungsgemäß besonders bevorzugt ist, weist der Belagträger 11 zusätzlich zu den Ansätzen 12, 13 nach Fig. 4 den mittig liegenden Ansatz 14 auf. Der Ansatz 14 ist in der zur Bremsscheibenachse parallelen Ebene in einem Kopfbereich 15 breiter als in einem Fußbereich 16, d.h. der Ansatz 14 verjüngt sich zur Außenkontur des Belagträgers 11 hin. Dabei ist die Höhe des Ansatzes 14derart bemessen, daß entsprechend der Ausführung der Niederhaltefeder deren Positionierung auf dem Belagträger sehr einfach ist. Bei diesem besonders bevorzugtem Ausführungsbeispiel ist die Länge der Aufnahmeöffnungen 8, 9 der Niederhaltefeder 2 entlang der Federachse C größer als die entsprechende Breite der Ansätze 12, jedoch ist die Länge der mittigen Aufnahmeöffnung 10 kürzer als die Breite des Kopfbereiches 15, aber länger als die Breite des Fußbereiches 16 des mittigen Ansatzes 14. Durch die geometrischen Verhältnisse zwischen der Aufnahmeöffnung 10 und dem Kopfbereich 15 einerseits sowie zwischen der Höhe des Ansatzes 14 und dem Maß des Radialversatzes des Mittelabschnitts 3 der Niederhaltefeder 2 andererseits, kann die Niederhaltefeder 2 aus einer Schrägstellung seitlich mittels der Aufnahmeöffnung 10 unter den Kopfbereich 15 geschoben werden. Dabei braucht nicht die volle Federspannung überwunden zu werden. Die Niederhaltefeder 2 ist aber nach dem Einschieben gemäß der Darstellung nach Fig. 6, 6a an dem Belagträger 11 angebracht. Sie kann sich nicht unbeabsichtigt lösen, weil mindestens ein Ende der Aufnahmeöffnung 10 erfindungsgemäß den längeren Kopfbereich 15 untergreift.

Ist der Niederhaltebügel 1 nach Fig. 6 symmetrisch zu einer gedachten Mittelachse am Bremssattel befestigt, wird die Niederhalteteder 2 und somit der Belagträger 11 radial bezüglich der Bremsscheibe gegen den Belagschacht vorgespannt. Bei einer gedachten Drehrichtung D der Bremsscheibe wird der Belag mitgezogen. Demgegenüber wird die Niederhaltefeder 2 nicht mitgezogen, weil sie durch die Stützbereiche 4, 5 des Mittelabschnitts 3 an dem Niederhaltebügel 1 festgelegt (gekoppelt) und wegen der Längsausdehnung der Aufnahmeöffnungen 8, 9 und 10 in Drehrichtung der Bremsscheibe von dem Belagträger entkoppelt ist. Gegebenenfalls nach Überschreiten eines Schwellenwertes als Größe der tangentialen Verschiebung des Belagträgers 11 gegenüber der Niederhaltefeder 2 in Richtung seitlicher Betagschachtführung infolge einer Anlage an die Bremsscheibe, stützt sich der Ansatz 13 an dem Federschenkel 6 ab. Bei Bremsentlastung schiebt die elastische Kraft des Federschenkels 6 den Belagträger 11 in seine Ausgangsstellung zurück. Das gleiche gilt bei dem Ausführungsbeispiel nach Fig. 4.

Bei dem Ausführungsbeispiel nach Fig. 3 kann die Rückführung in die Ausgangsstellung dadurch erfolgen, daß die Länge der Aufnahmeöffnung 8 oder 9 gegenüber dem Ansatz 12 derart gewählt ist, daß mindestens auf einer Seite eine Anlage zwischen Aufnahmeöffnung und Ansatz tangential bezüglich der Bremsscheibe erfolgt.

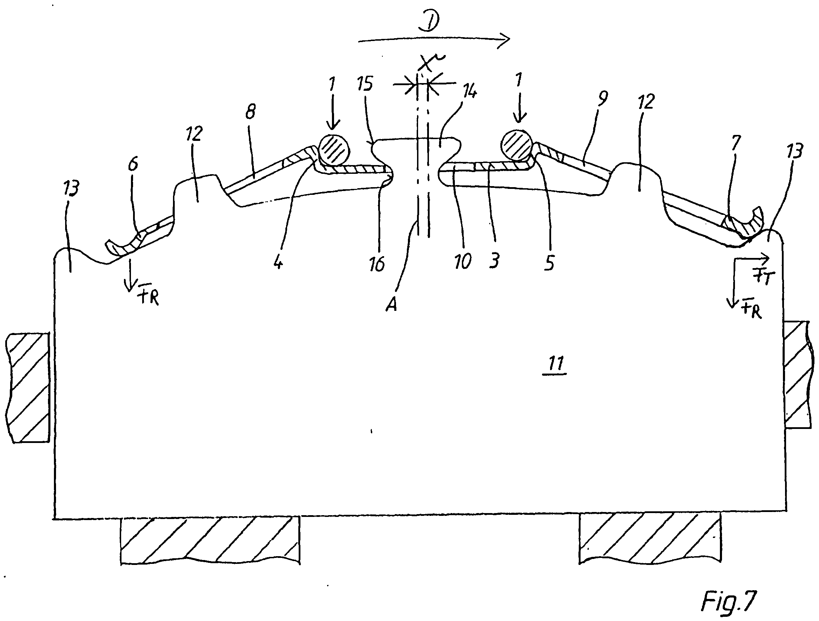

Als besonders vorteilhaft ist das Ausführungsbeispiel nach Fig. 7 anzusehen. Bei diesem Ausführungsbeispiel ist der Niederhaltebügel 1 gegenüber einer gedachten Mittelachse A in Drehrichtung D der Bremsscheibe unsymmetrisch, um einen Betrag X versetzt am Bremssattel befestigt. Daraus resultiert um den Betrag X eine entsprechende seitliche Verschiebung und Festlegung der Niederhaltefeder 2, die mit ihren Stützbereichen 4, 5 an dem Niederhaltebügel 1 anliegt. Da sich bei diesem Ausführungsbeispiel der Federschenkel 7 an dem Ansatz 13 abstützt und der Federschenkel 6 gegen die Außenkontur des Belagträgers 11 wirkt, ergibt sich eine bezüglich der Bremsscheibe radiale und tangentiale Vorspannung des Belagträgers 11 gegenüber dem Belagschacht (vgl. Kräfte F_{R} und F_{T}). Somit wird in vorteilhafter Weise ein seitliches Anschlagen vermieden. Erfolgt in umgekehrter Drehrichtung eine Belagmitnahme, so wird der Belagträger gegenüber der Feder entkoppelt. Bei Bremsentlastung wird dann, wie oben bereits beschrieben, der Belagträger mittels des zugeordneten Federschenkels in seine Ausgangsstellung zurückgeschoben.

Bei den oben beschriebenen Ausführungsbeispielen sind jeweils die Niederhaltefeder und der Belagträger symmetrisch ausgeführt. Dies ist gerade beim Einsetzen in die Bremse von Vorteil, weil dadurch ein seitenverkehrter Einbau vermieden wird und die Richtung der Feder- und Belagträgervorspannung erst durch die ortsfeste Anbringung des Niederhaltebügels (symmetrisch oder unsymmetrisch) an dem Bremssattel erfolgt.

Selbstverständlich ist die in Fig. 7 gezeigte unsymmetrische Festlegung des Niederhattebügel 1 um die Größe X am Bremssattel auch bei allen anderen erwähnten Ausführungsbeispielen möglich.

Die Endabschnitte der Federschenkel 6, 7 können geschlitzt (offen) ausgeführt sein, solange ein Eingriff der zugeordneten Ansätze im Sinne einer Kopplung bzw. Entkopplung gewährleistet ist. Ebenso gilt dies auch für die Ausbildung des Ansatzes 14. Dieser kann angestaucht sein bzw. die zugeordnete Öffnung 10 der Niederhaltefeder 2 kann auch unter einer Schräg- bis hin zu einer Ouerstellung gegenüber der Federachse C verlaufen, wenn dadurch eine Festlegung untereinander ermöglicht wird und gleichzeitig die Bedingungen der Kopplung und Entkopplung zwischen Belagträger und Niederhaltefeder erfüllt sind. Eine Ausführung, bei der die Längsachse der Öffnung 10 mit der Federachse C einen Winkel α einschließt, ist in den Fig. 2a und 6b gezeigt. Der Winkel α kann bis zu 90° betragen. Bei der Montage muß bei dieser Ausführung die Feder 2 nach dem Einführen des Ansatzes 14 in die Aufnahmeöffnung 10 nur entgegen dem Winkel α gedreht werden, bis auch die anderen Aufnahmeöffnungen 8, 9 über die Ansätze 12 in ihre Endstellung entsprechend Fig. 6b gebracht werden können.

In der Fig. 2b ist eine Ausführung mit abgestufter zentraler Aufnahmeöffnung 10 gezeigt. Hier dient der in der Figur oben liegende Bereich der Aufnahmeöffnung 10 dem Einführen des Ansatzes 14. Nach Einführen des Ansatzes 14 wird die Niederhaltefeder 2 derart verschoben, daß der in Fig. 2b untere Bereich der Aufnahmeöffnung 10 unter den Ansatz 14 gelangt, dessen Längsausdehnung kleiner als die Breite des Kopfes 15 des Ansatzes 14 ist, wodurch eine sichere Halterung gewährleistet ist.

Die Ausbildungen und Ansätze zwischen Niederhaltefeder und Kraftübertragungselement können im Sinne einer Festlegung, einer Kopplung und Entkopplung untereinander vertauscht werden.

Sämtliche obigen Ausführungen, die im Zusammenhang mit dem Belagträger 11 gemacht sind, gelten ebenso für eine gegebenenfalls vorgesehene Druckplatte.

### BEZUGSZEICHENLISTE

- 1: Niederhaltebügel
- 2: Niederhaltefeder
- 3: Mittelabschnitt
- 4: Stützbereich
- 5: Stützbereich
- 6: Federschenkel
- 7: Federschenkel
- 8: Aufnahmeöffnung
- 9: Aufnahmeöffnung
- 10: Aufnahmeöffnung
- 11: Belagträger
- 12: Ansatz
- 13: Ansatz
- 14: Ansatz
- 15: Kopfbereich
- 16: Fußbereich
- A: Mittelachse
- B: Breite
- C: Längsachse
- D: Drehrichtung
- F_{R}: Radialkraft
- F_{T}: Tangentialkraft
- X: Versatz
- α: Anstellwinkel

## Patentansprüche

1. Vorrichtung zum Halten eines Bremsbelages in einer Scheibenbremse, mit einem Kraftübertragungselement in Form eines Belagträgers (11), einer Niederhaltefeder (2) und einem die Niederhaltefeder (2) gegen das Kraftübertragungselement (11) vorspannenden Niederhalteelement (1) in Form eines Niederhaltebügels, wobei
die Niederhaltefeder (2) in Drehrichtung der Bremsscheibe mit dem Niederhalteelement (1) gekoppelt und von dem Kraftübertragungselement (11) entkoppelt ist, sich jedoch bei einer über einen Schwellenwert hinausgehenden Verschiebung des Kraftübertragungselements im Sinne eines Mitdrehens mit der Bremsscheibe in Umfangsrichtung der Bremsscheibe elastisch an dem Kraftübertragungselement (11) abstützt,
**dadurch gekennzeichnet, dass**
das Niederhalteelement (1) derart bezüglich der Mitte des Kraftübertragungselements (11) versetzt ist, dass es die Niederhaltefeder (2) und damit das Kraftübertragungselement (11) mittels eines Ansatzes (12) und einer elastischen Abstützung (6, 7; 13) der Niederhaltefeder (2) an dem Kraftübertragungselement (11) radial und tangential bezüglich der Bremsscheibe vorspannt,
die Niederhaltefeder (2) und das Kraftübertragungselement (11) symmetrisch ausgeführt sind,
die Kopplung der Niederhaltefeder (2) mit dem Niederhalteelement (1) mindestens einen in Umfangsrichtung der Bremsscheibe ausgerichteten Anschlag (4, 5) beinhaltet, der von einer Seitenbegrenzung eines in radialer Richtung der Bremsscheibe versetzten Mittelabschnitts (3) der Niederhaltefeder (2) gebildet ist, und
die Niederhaltefeder (2) in Axialrichtung der Bremsscheibe mit dem Kraftübertragungselement (11) gekoppelt und von dem Niederhalteelement (1) entkoppelt ist.

2. Vorrichtung nach Anspruch 1, **dadurch gekennzeichnet, dass** der Schwellenwert Null ist.

3. Vorrichtung nach Anspruch 1 oder 2, **dadurch gekennzeichnet, dass** die Breite (B) desjenigen Bereichs der Niederhaltefeder (2), in dem der Anschlag (4, 5) ausgebildet ist, größer als die Dicke des Kraftübertragungselements (11) ist.

4. Vorrichtung nach einem der vorangehenden Ansprüche, **dadurch gekennzeichnet, dass** zumindest ein freies Ende (6, 7) der Niederhaltefeder (2) sich nach radial innen bezüglich der Bremsscheibe erstreckt.

5. Vorrichtung nach einem der vorangehenden Ansprüche, **dadurch gekennzeichnet, dass** zur Entkopplung der Niederhaltefeder (2) in Axialrichtung der Bremsscheibe und zur Kopplung der Niederhaltefeder (2) in Drehrichtung der Bremsscheibe von dem bzw. mit dem Kraftübertragungselement (11) mindestens ein Ansatz (12, 14) an dem Kraftübertragungselement (11) oder der Niederhaltefeder (2) vorhanden ist, der in eine quer zur Axialrichtung der Bremsscheibe längliche Ausnehmung (8, 9, 10) in der Niederhaltefeder (2) oder dem Kraftübertragungselement (11) eingreift.

6. Vorrichtung nach Anspruch 5, **dadurch gekennzeichnet, dass** der Ansatz (14) eine zu seinem Kopf (15) hin zunehmende Breite gegenüber seinem Fußbereich (16) hat und vorzugsweise am Kraftübertragungselement (11) ausgebildet ist.

7. Vorrichtung nach Anspruch 6, **dadurch gekennzeichnet, dass** die längliche Ausnehmung (10) an der Niederhaltefeder (2) kürzer als die Breite des Kopfes (15) und länger als die Breite des Fußes (16) des Ansatzes (14) des Kraftübertragungselementes (11) ist.

8. Vorrichtung nach Anspruch 7, **dadurch gekennzeichnet, dass** die Längsachse der Ausnehmung (10) mit der Längsachse (C) der Niederhaltefeder (2) selbst einen von Null verschiedenen Winkel (α) einschließt.

9. Vorrichtung nach Anspruch 6, **dadurch gekennzeichnet, dass** die Ausnehmung (10) an der Niederhaltefeder (2) in einem ersten Bereich länger als die Breite des Kopfes (15) und in einem zweiten Bereich kürzer als die Breite des Kopfes (15), aber länger als die Breite des Fußes (16) des Ansatzes (14) des Kraftübertragungselementes (11) ist.

10. Vorrichtung nach einem der vorangehenden Ansprüche, **dadurch gekennzeichnet, dass** die Niederhaltefeder (2) eine Blattfeder ist.

## Claims

1. Device for retailing a friction lining in a disc brake, comprising a torque transfer element in the form of a friction lining backing plate (11), a retaining spring (2) and a retaining element (1) in the form of a retaining yoke which preloads the retaining spring (2) against the torque transfer element (11),
the retaining spring (2) being coupled to the retaining element (1) and uncoupled from the torque transfer element (11) in the direction of rotation of the brake disc, but bearing elastically against the torque transfer element (11) when the torque transfer element is displaced in the circumferential direction of the brake disc through turning with the brake disc beyond a threshold value,
**characterised in that**
the retaining element (1) is offset with respect to the centre of the torque transfer element (11) so as to preload the retaining spring (2) and therefore the torque transfer element (11) radially and tangentially with respect to the brake disc by means of a projection (12) and an elastic abutment point (6, 7; 13) of the retaining spring (2) on the torque transfer element (11),
the retaining spring (2) and the torque transfer element (11) are configured symmetrically,
the coupling between the retaining spring (2) and the retaining element (1) includes at least one stop (4, 5) aligned in the circumferential direction of the brake disc, which stop (4, 5) is formed by a lateral delimitation of a central section (3) of the retaining spring (2) offset in the radial direction of the brake disc, and
the retaining spring (2) is coupled to the torque transfer element (11) and uncoupled from the retaining element (1) in the axial direction of the brake disc.

2. Device according to Claim 1, **characterised in that** the threshold value is zero.

3. Device according to Claim 1 or 2, **characterised in that** the width (B) of the portion of the retaining spring (2) in which the stop (4, 5) is formed is greater than the thickness of the torque transfer element (11).

4. Device according to any one of the preceding claims, **characterised in that** at least one free end (6, 7) of the retaining spring (2) extends radially inwards with respect to the brake disc.

5. Device according to any one of the preceding claims, **characterised in that** for uncoupling the retaining spring (2) from the torque transfer element (11) in the axial direction of the brake disc, and for coupling the retaining spring (2) to the torque transfer element (11) in the direction of rotation of the brake disc, at least one projection (12, 14) is present on the torque transfer element (11) or on the retaining spring (2), which projection (12, 14) engages in an elongated opening (8, 9, 10) in the retaining spring (2) or in the torque transfer element (11) disposed transversely to the axial direction of the brake disc.

6. Device according to Claim 5, **characterised in that** the projection (14) has a width increasing towards its head (15) in comparison to its foot portion (16) and is preferably formed on the torque transfer element (11).

7. Device according to Claim 6, **characterised in that** the elongated opening (10) in the retaining spring (2) is shorter than the width of the head (15) and longer than the width of the foot (16) of the projection (14) of the torque transfer element (11).

8. Device according to Claim 7, **characterised in that** the longitudinal axis of the opening (10) includes with the longitudinal axis (C) of the retaining spring (2) itself an angle (α) differing from zero.

9. Device according to Claim 6, **characterised in that** the opening (10) in the retaining spring (2) is, in a first portion, longer than the width of the head (15) and, in a second portion, shorter than the width of the head (15) but longer than the width of the foot (16) of the projection (14) of the torque transfer element (11).

10. Device according to any one of the preceding claims, **characterised in that** the retaining spring (2) is a leaf spring.

## Revendications

1. Dispositif de maintien d'une garniture de frein dans un frein à disque, avec un élément de transmission de force sous la forme d'un support de garniture (11), un ressort de maintien bas (2) et un élément de maintien bas (1) sous la forme d'un étrier de maintien bas précontraignant le ressort de maintien bas (2) contre l'élément de transmission de force (11), où
le ressort de maintien bas (2) est couplé dans la direction de rotation du disque de freinage avec l'élément de maintien bas (1) et est découplé de l'élément de transmission de force (11), s'appuie cependant lors d'un déplacement dépassant une valeur de seuil de l'élément de transmission de force dans le sens d'une co-rotation avec le disque de freinage dans la direction circonférentielle du disque de freinage élastiquement à l'élément de transmission de force (11),
**caractérisé en ce que** l'élément de maintien bas (1) est décalé de telle sorte relativement au milieu de l'élément de transmission de force (11) qu'il précontraint le ressort de maintien bas (2) et de ce fait l'élément de transmission de force (11) au moyen d'un épaulement (12) et d'un support élastique (6, 7; 13) du ressort de maintien bas (2) à l'élément de transmission de force (11) radialement et tangentiellement relativement au disque de freinage,
le ressort de maintien bas (2) et l'élément de transmission de force (11) sont réalisés d'une manière symétrique,
le couplage du ressort de maintien bas (2) avec l'élément de maintien bas (1) contient au moins une butée (4, 5) orientée dans la direction circonférentielle du disque de freinage, qui est formée par une délimitation latérale d'une section médiane (3) du ressort de maintien bas (2) décalée dans la direction radiale du disque de freinage, et
le ressort de maintien bas (2) est couplé dans la direction axiale du disque de freinage avec l'élément de transmission de force (11) et est découplé de l'élément de maintien bas (1).

2. Dispositif selon la revendication 1, **caractérisé en ce que** la valeur de seuil est zéro.

3. Dispositif selon la revendication 1 ou 2, **caractérisé en ce que** la largeur (B) de la zone du ressort de maintien bas (2), dans laquelle est formée la butée (4, 5), est plus grande que l'épaisseur de l'élément de transmission de force (11).

4. Dispositif selon l'une des revendications précédentes, **caractérisé en ce qu'**au moins une extrémité libre (6, 7) du ressort de maintien bas (2) s'étend radialement vers l'intérieur relativement au disque de freinage.

5. Dispositif selon l'une des revendications précédentes, **caractérisé en ce que** pour le découplage du ressort de maintien bas (2) dans la direction axiale du disque de freinage et pour le couplage du ressort de maintien bas (2) dans la direction de rotation du disque de freinage du respectivement avec l'élément de transmission de force (11), il est réalisé au moins un épaulement (12, 14) à l'élément de transmission de force (11) ou au ressort de maintien bas (2) qui s'engage dans un évidement oblong (8, 9, 10) transversal à la direction axiale du disque de freinage dans le ressort de maintien bas (2) ou dans l'élément de transmission de force (11).

6. Dispositif selon la revendication 5, **caractérisé en ce que** l'épaulement (14) a une largeur augmentant vers sa tête (15) par rapport à sa zone de base (16) et est réalisé de préférence à l'élément de transmission de force (11).

7. Dispositif selon la revendication 6, **caractérisé en ce que** l'évidement oblong (10), au ressort de maintien bas (2), est plus court que la largeur de la tête (15) et plus long que la largeur de la base (16) de l'épaulement (14) de l'élément de transmission de force (11).

8. Dispositif selon la revendication 7, **caractérisé en ce que** l'axe longitudinal de l'évidement (10) forme avec l'axe longitudinal (C) du ressort de maintien bas (2) lui-même un angle (α) différent de zéro.

9. Dispositif selon la revendication 6, **caractérisé en ce que** l'évidement (10) au ressort de maintien bas (2), dans une première zone, est plus long que la largeur de la tête (15), et dans une seconde zone, plus court que la largeur de la tête (15) mais plus long que la largeur de la base (16) de l'épaulement (14) de l'élément de transmission de force (11).

10. Dispositif selon l'une des revendications précédentes, **caractérisé en ce que** le ressort de maintien bas (2) est un ressort à lames.
